# EUROPEAN PATENT SPECIFICATION

(11) **EP 1 578 597 B1**
(45) Date of publication and mention of the grant of the patent: **23.01.2013**
(21) Application number: 03814941.5
(22) Date of filing: 23.12.2003
(51) Int. Cl.: B31F 1/00, B32B 7/02, B32B 7/12, B32B 15/08, F16L 59/10

(54) **FACING FOR INSULATION AND OTHER APPLICATIONS**
VERKLEIDUNG FÜR ISOLIERUNG UND ANDERE ANWENDUNGEN
REVETEMENT POUR ISOLATION ET AUTRES APPLICATIONS

(30) Priority: 27.12.2002 US 330162; 09.12.2003 US 731847; 16.12.2003 US 737522
(43) Date of publication of application: 28.09.2005
(73) Proprietor: 3M Innovative Properties Company, Saint Paul, MN 55133-3427 (US)
(72) Inventor: COHEN, Lewis, S., Needham, MA 02192 (US); VAN BEUKERING, Sebastianus, Franciscus, Maria, NL-2801 LL Gouda (NL); WYER, Steven, Smethwick B67 6LS (GB)
(74) Representative: Vossius & Partner
(86) International application number: PCT/US2003/041134
(87) International publication number: WO 2004/060646

(56) References cited:
- WO-A2-01/53015
- GB-A- 2 108 046
- US-A- 4 503 189
- US-A- 4 867 818
- US-A- 4 888 247
- US-A- 5 158 831
- US-B1- 6 207 271

## Description

### FIELD OF THE INVENTION

This invention relates generally to insulation products for use with fluid conduits, such as pipes or ducts, and more particularly, to a facing material for insulation surrounding fluid conduits for providing a vapor barrier and a weather seal.

### BACKGROUND OF THE INVENTION

Pipes or ductwork in dwellings, commercial buildings and industrial plants are used for heating or air conditioning purposes, and therefore carry fluids, such as heated or cooled air or steam. In industrial applications, pipes or ductwork also may carry chemicals or petroleum products or the like. The ductwork typically is formed of aluminum or steel, while the pipes may be formed of any suitable material, such as copper, steel, aluminum, plastic, rubber or other like materials.

Such pipes or ductwork and associated heating or air conditioning units typically are covered with an exterior layer of insulation. The insulation used to cover such pipes or ductwork and associated heating and air conditioning units often includes fiberglass, mineral wool, foamed cellular glass or a rigid foam, covered by a jacket. Materials which may be used in the insulation jacket include a layer or layers of foil, a layer or layers of paper, such as a kraft paper, a scrim and a layer of polyester. Ductboard is often used to cover ductwork.

When such pipes or ductwork are in a location exposed to weather elements, or when they are in other environments where the exterior insulation surface is subject to degradation by moisture or the like, it is common to cover the insulation with a facing. This is particularly true for insulation having an exterior layer of paper or for ductboard, whether or not the exposed outer surface is a metalized layer or a paper layer, to protect the insulation from moisture, sun, wind and other weather elements. One of the most commonly used facings is sheet metal, such as galvanized steel or aluminum, for example 0.5 to 1.0 millimeter thickness sheets of aluminum. Typically, flat metal sheets are prefabricated for a particular application at a workshop remote from the application site. These flat metal sheets are formed into three-dimensional pieces that are shaped and sized to conform to the pipe, duct or other conduit that is to be covered. These pre-formed sheets are then mounted over the insulation at the worksite and are attached with metal bands or the like. Such sheet metal facing is particularly used on pipes, columns and equipment in chemical and petro-chemical plants. However, sheet metal facing has certain drawbacks. In the first place, the prefabrication of these metal sheets at the factory into a desired shape and size is very time-consuming and thus expensive. The subsequent application of these products to the insulation covered conduits is also a time-consuming process. The metal facing also can be very heavy and therefore difficult to handle and manipulate at the jobsite. Both prefabrication and application require a specially skilled labor force who must be trained. In addition, the resulting sheet metal facing has a large number of joints which often are not completely sealed and which permit water to pass therethrough and thereby to wet the insulation. This wetting of the insulation is undesirable, and can result in corrosion of the underlying equipment and conduits. Any repair work can be quite costly and time-consuming.

Another known solution includes covering the insulation with butyl rubber. However, this solution also has drawbacks including the fact that the butyl rubber does not perform well and has a poor appearance. A butyl rubber covering tends to delaminate at temperatures below 0°F (-17°C) and above 120°F (49°C), and therefore should not be used in extreme weather environments where such exterior coverings are most desired and are often necessary. Butyl rubber is also very difficult to apply because it is messy to cut and form, and it is very heavy. Butyl rubber has also been known to cause delamination of the outer surface of the insulation from the fiberglass or the wool disposed in the interior of the insulation, because of its weight and because of its lack of strength at elevated temperatures. Butyl rubber also tends to creep, has poor fire and smoke ratings and therefore is not UL listed. Finally, solvents are required to activate butyl rubber at temperatures below 45°F (7°C).

It is also known to cover insulation with thin layers of aluminum foil using a butyl rubber adhesive. However, such coverings have little or no puncture resistance, and the butyl rubber adhesive layer has the same drawbacks noted above for butyl rubber facing, including a tendency to run or ooze at elevated temperatures.

Scrim and mastics are also used to cover insulation. However, the use of such materials is often very labor-intensive and requires a multiple step process. These products can only be applied during certain weather conditions, and it is very difficult to regulate the thickness of mastic to make it uniform. Consequently, such products have very limited applications and generate a poor appearance.

Another known product is bitumen felt and netting. This product is very labor-intensive to apply and is not recommended for exterior use. It also has a very poor fire rating and is unsightly. Its use, therefore, is very limited.

There exists a need for a facing material for covering insulation, particularly exterior insulation, that is relatively inexpensive, easy to apply, can be easily cut with scissors or a knife, is puncture-resistant and has the strength, rigidity and resistance to corrosion of conventional aluminum facing.

### SUMMARY OF INVENTION

The present invention is directed to a combination of a covering for insulation and insulation according to claim 1. Further aspects described below are relevant for the context of the invention.

This invention generally describes a facing material for application to exposed surfaces of insulation or other like materials to provide a vapor seal and to protect the insulation from weather-related damage. The facing overcomes the drawbacks of the prior art systems discussed above, since it is relatively inexpensive, is easy to apply, provides a good appearance, is easily cut and manipulated at the job site, and provides substantially a 100% vapor seal. The facing can be molded manually to conform to the shape of the surface being covered, and the facing will retain that shape once molded. The facing of this invention also can be applied and will maintain its integrity in extreme weather conditions and is very fire-resistant. A method for applying a facing to insulation is also described.

In one aspect, a covering for insulation is described. The facing includes a first layer of a metal-containing foil, a second layer of a metal- containing foil, a third layer of a metal-containing foil, and a first layer of a puncture resistant polymer film disposed between the first and second layers of foil, and a second layer of a puncture resistant polymer film disposed between the second and third layers of foil. Alternatively, a layer of pressure sensitive adhesive is applied to the third layer of foil.

At least the first layer of metal-containing foil may be formed of aluminum. At least the first layer of the puncture resistant polymer film may be formed of polyester. A typically thickness for the metal-containing foil layers is about 5-50 microns, while a typical thickness of the puncture resistant polymer film layers is about 10-50 microns, although the polymer film layers could be as thin as 5 microns.

In yet another aspect, a covering for insulation is provided which includes multiple layers of a metal-containing foil and multiple layers of a puncture resistant, polymer film. The layers of puncture resistant polymer film are alternated with the layers of a metal-containing foil. The covering also includes a layer of a pressure sensitive adhesive disposed on one side of the covering, and on the other, exposed side of the covering, a layer of material resistant to ultraviolet radiation, acid rain, and salt. The covering is sufficiently flexible that it may be conformed to the shape of an insulated pipe.

In another aspect, a weather seal for use on exposed surfaces is disclosed. This weather seal includes a first layer of an aluminum foil, a second layer of a metal-containing, foil, a third layer of a metal-containing foil, a first layer of a puncture resistant material disposed between the first layer of aluminum foil and the second layer of metal-containing foil, a second layer of a puncture resistant material disposed between the second and third layers of metal-containing foil and a layer of a pressure sensitive adhesive disposed on the third layer of metal-containing foil. The first and second layers of puncture resistant material are formed of polyester. Alternatively, the combined thickness of the weather seal is less than 100 microns. Alternatively, the second and third layers of metal-containing foil are formed of a metalized foil.

In another aspect, a covering for exterior and interior insulation is disclosed. This covering includes a first layer of aluminum foil having a thickness in the range of from about 5 microns to about 50 microns, a first layer of polyester adhered to the first layer of aluminum foil with an adhesive, the polyester layer having a thickness greater than about 23 microns, a second layer of aluminum foil adhered to the first layer of polyester material by an adhesive, the second layer of aluminum foil having a thickness in the range of from about 5 microns to about 50 microns, a second layer of polyester material adhered to the second layer of aluminum foil by an adhesive, the second layer of polyester material having a thickness greater than about 23 microns, a third layer of aluminum foil adhered to the second layer of polyester material by an adhesive, the third layer of aluminum foil having a thickness in the range of from about 5 microns to about 50 microns, and a pressure sensitive adhesive layer disposed on the third layer of aluminum foil.

In yet another aspect, another covering for insulation is disclosed. In one aspect, the covering includes a central layer, a polymer extrusion layer disposed on each side of the central layer, and two structures, one structure affixed to each polymer extrusion layer, each structure comprising alternating layers of a metal-containing foil and a puncture-resistant polymer film. Alternatively, at least one layer of a metal-containing foil in each structure includes a sheet of aluminum foil. Alternatively, at least one layer of puncture-resistant polymer film in each structure is formed of a polyester film.

Alternatively, the central layer comprises a woven fabric which may be formed of polyethylene, or a non-woven fiberglass. The extrusion may be formed of a low-density polyethylene. The covering of this embodiment may be sufficiently rigid to retain a shape once formed into that shape, and may be cut using a hand-held implement with a sharp edge. The covering may have a total thickness of no greater than about 350 microns.

In yet another aspect, at least one of the structures includes three layers of a metal-containing foil and two layers of a puncture-resistant polymer, at least one layer of the metal-containing foil being disposed on a outer surface of the covering.

An outer layer of a metal-containing foil is approximately 25 microns in thickness, and all of the other layers of a metal-containing foil are approximately 9 microns in thickness, and the layers of a puncture-resistant polymer film are approximately 23. microns in thickness. Alternatively, at least one of the structures includes two layers of a metal-containing foil having a layer of a puncture-resistant polymer film disposed therebetween, and, each layer of a metal-containing foil is approximately 25 microns in thickness, and the layer of a puncture-resistant polymer film is approximately 23 microns in thickness.

In another aspect, a weather seal for use on exposed surfaces is disclosed. The weather seal includes a first outer layer of aluminum foil which has an outer surface and an inner,surface, a layer of polyester bonded to the inner surface of the first outer layer of aluminum foil, a second layer of aluminum foil bonded to the layer of polyester, a layer of fabric, a first layer of a polymer extrusion bonding the second layer of aluminum foil to the layer of fabric, the first layer of an extrusion having a melting temperature lower than a melting temperature of the layer of fabric, a third layer of aluminum foil, a second layer of a polymer extrusion bonding the fabric layer to the third layer of aluminum foil and having a melting temperature below the melting temperature of the fabric layer, a second layer of polyester bonded to the third layer of aluminum foil, and a fourth layer of aluminum foil bonded to the second layer of polyester. Alternatively, there is a fifth layer of aluminum foil and a third layer of polyester disposed between the first and second layers of aluminum foil, and a sixth layer of aluminum foil and a fourth layer of polyester disposed between the third and fourth layers of aluminum foil. Alternatively, the second, third, fourth, fifth and sixth layers of aluminum foil have a thickness of no greater than about 9 microns. The first and second layers of polyester may have a thickness of no greater than about 23 microns. The fourth layer of aluminum foil may be covered on a side opposite the second layer of polyester with a layer of a pressure-sensitive adhesive. Each layer of aluminum foil may have a thickness of no greater than about 25 microns, and each layer of polyester has a thickness of no greater than about 23 microns.

In yet another aspect, a weather seal for covering exposed insulation surfaces on fluid conduits is disclosed. The weather seal includes a central fabric layer having a pattern, one structure bonded to one side of the central fabric layer and another structure bonded to the other side of the central fabric layer, each structure including multiple alternating layers of a metal foil and a puncture-resistant polymer bonded together with an adhesive, the weather seal being manually bendable into a desired configuration, the weather seal retaining the desired configuration once a manual force is removed, the weather seal being manually cutable with a hand-held implement. There may be a polymer extrusion disposed on either side of the central fabric layer for bonding the two structures to the central fabric layer. The weather seal may have a puncture resistance of at least 40 kilograms as measured in accordance with ASTM D-1000, and a tear strength of at least 7.60 kilograms as measured in accordance with ASTM D-624. In another The total thickness of weather seal may not exceed about 350 microns.

In another aspect, a method for protecting insulation from damage due to moisture and other environmental factors is disclosed. This method includes the step of providing a covering material having a metal-containing layer on one surface and a layer of a pressure sensitive adhesive on a second surface, as well as a layer of a puncture resistant material disposed between the metal-containing layer and the adhesive layer, cutting the covering manually at a job site to form a first sheet, removing the release liner covering the pressure sensitive adhesive on the first sheet, applying the first sheet to the insulation so that the adhesive layer bonds to the insulation and the metal-containing layer is exposed, and applying additional sheets of covering material directly to the insulation such that each sheet of covering material overlaps sheets of covering material directly adjacent thereto.

The method may be used for covering an insulated duct having a substantially rectangular cross-sectional shape. The applying steps may include applying the first sheet of covering material to a bottom wall so that at least a three inch portion extends upwardly along each sidewall, applying a cut sheet of covering material to each side wall of the insulated duct so that it overlaps the portion of the sheet along the bottom wall which extends upwardly along the side wall, and so that a portion of the sheet material along each side wall extends along the top wall, and applying a fourth sheet of covering material to the top wall to overlap the portions of the sheets along the side wall which extend along the top wall.

In another example, where the pipe to be insulated has a curved portion, lengths of a pressure sensitive adhesive tape having a metal-containing foil layer and a puncture resistant polymer layer are wrapped about the sheets of covering material to conform the covering material to the configuration of the pipe.

### BRIEF DESCRIPTION OF THE DRAWINGS

The objects, advantages and features of this invention will be more clearly appreciated from the following detailed description, when taken in conjunction with the accompanying drawings, in which:
Fig. 1 is a cross-sectional view of a cutaway portion of one embodiment of the facing of this invention;
Fig. 1A is a cross-sectional view of a cutaway portion of another embodiment of the facing of this invention;
Fig. 1B is a cross-sectional view of a cutaway portion of yet another embodiment of the facing of this invention;
Fig. 2 is a cross sectional schematic view of rectangular duct work illustrating a method for applying the facing of Fig. 1 to duct work:
Fig. 3 is a perspective schematic view illustrating a method for applying the facing of Fig. 1 to a cylindrical, straight pipe;
Fig. 4 is a perspective, schematic view illustrating a method for applying the facing of Fig. 1 to a curved pipe;
Fig. 5 is a perspective, schematic view illustrating a method for applying the facing of Fig. 1 to a reduced portion of rectangular duct work;
Fig. 6 is a perspective, schematic view illustrating a method for applying the facing of Fig. 1 to a reduced pipe;
Fig. 6A is a plan view of a precut facing segment to be applied to a tapered portion of the reduced pipe of Fig. 6;
Fig. 7 is a perspective schematic view illustrating a method for applying the facing of Fig. 1 to a T-section pipe;
Fig. 7A is a plan view of precut facing segments to be applied to the T-section pipe of Fig. 7;
Fig. 8 is a cross-sectional view of a cutaway portion of a wrapping tape to be used in the method of this invention;
Fig. 9 is a cross-sectional view of a cutaway portion of yet another embodiment of the facing of this invention;
Fig. 9A is a cross-sectional view of a cutaway portion of another embodiment of the facing of Fig. 9;
Fig. 9B is a cross-sectional view of a cutaway portion of yet another embodiment of the facing of Fig. 9;
Fig. 10 is a cross-sectional, schematic view of rectangular ductwork illustrating a method for applying the facing of Figs. 9, 9A and 9B to ductwork;
Fig. 11 is a perspective, schematic view illustrating a method for applying the facing of Figs. 9, 9A and 9B to a cylindrical, straight pipe;
Fig. 12 is a perspective, schematic view illustrating a method for applying the facing of Figs. 9, 9A and 9B to a curved pipe;
Fig. 13 is a perspective, schematic view illustrating a method for applying the facing of Figs. 9, 9A and 9B to a reduced portion of rectangular ductwork;
Fig. 14 is a perspective, schematic view illustrating a method for applying the facing of Figs. 9, 9A and 9B to a reduced pipe;
Fig. 14A is a plan view of a precut facing segment to be applied to a tapered portion of the reduced pipe of Fig. 14;
Fig. 15 is a perspective, schematic view illustrating a method for applying the facing of Figs. 9, 9A and 9B to a T-section pipe; and
Fig. 15A is a plan view of precut facing segments to be applied to the T-section pipe of Fig. 15.
Fig. 15B

### DETAILED DESCRIPTION

In one embodiment, the facing structure of this invention includes multiple layers of a metal or metalized foil and a puncture-resistant polymer film which are laminated together. The layers of foil provide the desired vapor seal, weather resistance, and a desirable exterior appearance. The layers of polymer provide puncture and tear resistance, particularly with respect to birds and other animals. All of the materials together provide the desired fire resistance and resistance to flame spread.

The number of layers of foil and polymer, the thickness of each layer, and the actual materials forming the layers are chosen to provide a facing which optimizes each of the desired properties. For example, thick layers of metal would provide additional resistance to weathering, impermeability to moisture, resistance to puncture, and additional strength. However, if the metal layers become too thick, they cannot be easily cut and manually applied at the job site. The material also could become too heavy to be easily manipulated, conformed and applied by the average worker. Similarly, additional layers of a polymer film, or greater thicknesses of polymer film would increase the puncture resistance of the facing but could also increase the weight, reduce the conformability and render cutting more difficult, thus making it very difficult to apply at the job site and to conform it to the shape of the fluid conduits about which it is to be wrapped. Any failure to conform the facing closely to the shape of the insulation surrounding the conduit could produce gaps through which moisture or wind could enter, thus destroying the weather and vapor seal and permitting the damage to the insulation it is designed to prevent. Different materials also provide different advantages. For example, steel provides greater strength and puncture resistance, while aluminum is lighter in weight, cheaper, more easily cut and more flexible. A metalized foil is lighter in weight than most metal foils, but generally is not as strong or as impermeable to moisture. Polytetrafluoroethylene (PTFE) is waterproof, but is hard to cut and expensive. Polyester is cheaper and easier to cut and use than PTFE.

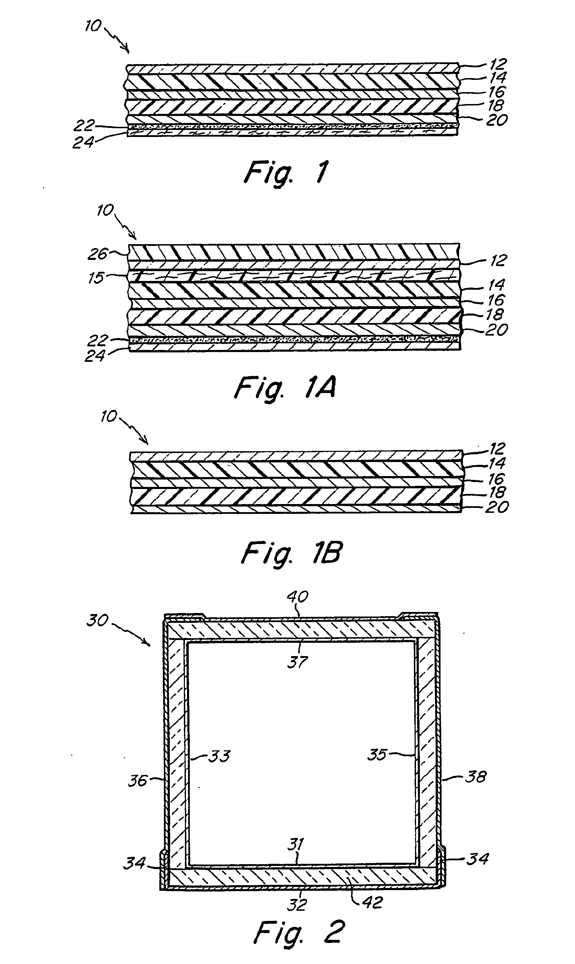

In one embodiment, as illustrated in Fig. 1, there is a consideration of all of these factors and a balancing of the desired properties to achieve an optimal result. This embodiment includes a first layer 12 of a metal-containing foil, a layer 14 of a polymer film, another layer 16 of a metal-containing foil, another layer 18 of a polymer film, and a third layer 20 of a metal-containing foil. A pressure sensitive adhesive layer 22 is disposed adjacent foil layer 20. Prior to application, pressure sensitive adhesive layer 22 is covered by a release liner 24.

Layers 12, 16 and 20 typically are formed either of a metalized foil or of a metal foil. In one embodiment, layers 12, 16 and 20 are formed of an aluminum foil. It is understood however, that other metal foils could be used for layers 12, 16 and 20, such as a stainless steel foil, a titanium foil, a copper foil, or the like. In another embodiment, foil layers 12, 16 and 20 are formed of a metalized foil. Metalized foils suitable for use in this invention include conventional, commercially available foils in which a metal, such as aluminum, steel or titanium, is vapor deposited on a substrate formed of a polymer, such as polyvinyl fluoride (sold under the name TEDLAR®), polyethylene or biaxially oriented polypropylene. Since metalized foils tend to have pin holes resulting from handling during manufacture or other causes, it is preferred that not all of layers 12, 16 and 20 be formed of a metalized foil. Preferably, at least one of layers 12, 16 and 20 is formed of a metal foil, such as aluminum. In a preferred embodiment, at least layer 12 is formed of a metal foil, although it is understood that layer 12 could be formed of a metalized foil, so long as one of layers 16 and 20 is formed of a metal foil. If only one of layers 12, 16 and 20 is formed of a metal foil, it is preferred that such a layer have a thickness of at least nine microns to provide the desired impermeability to moisture. If more than one of layers 12, 16 and 20 is formed of a metal foil, it is preferred that the total thickness of metal foil layers in facing 10 be at least nine microns, and more preferably 25 microns.

Layers 14 and 18 typically are formed of a polyester film although other polymer films such as polypropylene, polyethylene, polyurethane, Nylon®, Dacron®, Kevlar®, or polytetrafluoroethylene could be used.

Layers 12, 14, 16, 18 and 20 preferably are laminated or bonded together such as by an adhesive. This laminating adhesive could be a pressure sensitive adhesive or any conventional, flame retardant adhesive which is suitable for laminating a metal foil to a polymer, and which has high strength and durability. In one embodiment, a conventional urethane laminating adhesive is used, such as that, sold under the name Boscadur and purchased from the Bostik Chemical Division of the Emhart Fastener Group in Middleton, MA 01949. Another adhesive is sold under the name Adcote by Rohm & Haas. Typically, these laminating adhesives are provided in layers of about .3 to 2.0 mils and coating weights of about 3 to 11 I pounds per 1000 square feet (0,14 to 0,53 Pa).

Layer 22 of a pressure sensitive adhesive can be any commercially available, pressure sensitive adhesive that is suitable for bonding to a metal or metalized foil and to kraft paper or other insulation surfaces, and which maintains its integrity under low and high temperature conditions. Examples of such suitable pressure sensitive adhesives are disclosed in U.S. Patent No. 4, 780,347. In particular, one suitable adhesive is a pressure sensitive, acrylic adhesive, which when cured, approaches a 100% acrylic compound in which substantially all solvents have been removed. This adhesive can, however, tolerate up to 1% solvents after curing and still perform as desired. When cured, layer 22 formed of this particular acrylic adhesive typically has a thickness of between about 1.0 and 5 mils (0.025-0.013 mm) and a coating weight of about 5.5 to about 27.5 pounds per 1000 square feet (0.26 to 1.32 Pa). This particular acrylic adhesive is especially desirable, since it remains tacky and useable at temperatures as low as minus 17° Fahrenheit (-27°C) and as high as 284° Fahrenheit (140°C).

Release liner 24 can be any conventional release liner suitable for use with an acrylic adhesive. A typical release liner is a silicone coated, natural kraft paper release liner.

In one embodiment, where foil layers 12, 16 and 20 are formed of a metal foil, each layer 12, 16 and 20 is about 9 microns in thickness. However, especially for aluminum foils, thicknesses as low as 5 microns also would be suitable for many applications, while thickness as great as 50 microns would be acceptable, since facing 10 would still be cuttable with a knife or scissors and would still be sufficiently conformable to be used in covering most types of installations in most applications.

In one embodiment, layers 14 and 18 may be about 23 microns or greater in thickness. However, it is to be understood that layers 14 and 18 could be thinner than 23 microns, depending upon the degree of puncture and tear resistance desired. In fact, layers 14 and 18 could be as thin as 5 microns for certain applications. In addition, these layers 14 and 18 may also be as thick as 50 microns so long as the resulting facing 10 is still adequately conformable to the shape of the fluid conduit and the insulation surrounding it, and the facing 10 could still be cut with scissors or a knife. Preferably, the total thickness of facing 10 is 100 microns or less to allow it to be easily cut and handled at the job site. If the facing could be precut at the factory prior to transportation to the job site, much thicker layers of polymer and foil could be utilized to provide enhanced performance as long as the material still conformed to the outer shape of the insulation-covered conduit.

In one embodiment in which layers 12, 16 and 20 are formed of an aluminum foil having a thickness of about 9 microns, and in which layers 14 and 18 are formed of a polyester film having a thickness of about 23 microns, the total thickness of facing 10, not including adhesive layer 22, is about 85 microns. This thickness includes the thicknesses of the laminating adhesives used to bond together the layers. In this embodiment, a typically thickness of adhesive layer 22 is about 0.079 millimeters with a coating weight of about 50 grams per square meter. The peel adhesion is about 30 ounces per inch (0.3 N/mm) and the sheer adhesion is indefinite at 2.2 pounds per square inch (15,2 KPa). The tensile strength measured according to PSTC-31 is about 50 pounds per inch width (8.8 N/mm). The elongation at break is about 166%. The puncture resistance according to ASTM D-1000 is about 16 kilograms, while the tear strength according to ASTM D-624 is about 2 kilograms. A maximum temperature for continuous use is about 300° Fahrenheit (149°C), and the application temperature ranges from minus 17° Fahrenheit to 284° Fahrenheit (minus 27°C to plus 140°C). Facing 10 has no permeability to water vapor. Facing 10 has a chemical and ultraviolet resistance which is comparable to that of aluminum.

Figs. 1A and 1B illustrate other embodiments of the facing 10 of this invention. Like numbers are used for like parts, where appropriate. In Fig. 1A, a protective layer 26 is disposed on top of layer 12 of facing 10. Protective layer 26 protects layer 12, and thus all of the layers below layer 12 from damage caused by the environment. Preferably, protective layer 26 protects against damage due to ultraviolet radiation, and/or acid rain, and/or salt and/or other corrosive materials found in the environment. In one embodiment, protective layer 26 is a cured epoxy coating which is deposited on layer 12 while wet and allowed to cure. Other materials which could be used for layer 26 include a urethane material, polyvinyl fluoride, an acrylic material, a metalized film of polyvinyl fluoride, a metalized titanium film, a layer of silica vapor deposited upon layer 12 or layer of Saran®.

In another embodiment, as illustrated in Fig. 1B, facing 10 could be provided without adhesive layer 22 or release liner 24. In the absence of adhesive layer 22, a user could apply facing 10 directly to insulation at the factory prior to shipment to a job site. In such an instance, the facing 10 could be applied utilizing a conventional hot melt adhesive, or any other standard adhesive. If facing 10 of Fig. 1B is sent directly to the job site, the user could apply facing 10 to the insulation utilizing a mastic, or conventional adhesive, which is either applied to layer 20, or which is applied to the insulation prior to application of the facing 10.

Another alternative embodiment of the structure of Fig. 1 is illustrated in Fig. 1A in which an additional layer 15 is incorporated into the structure of Fig. 1 between a layer 12 of a metal-containing foil and a layer 14 of polymer film. This additional layer 15 can be incorporated between any two layers in the structure, but typically is not disposed on an outside surface, or adjacent adhesive layer 22. This layer could be formed of a fiberglass scrim, a polyester scrim, a woven fabric or a fiberglass and a polyester scrim. The woven fabric could be formed of a polypropylene or a polyester thread. Such a layer 15 provides additional tensile strength, and tear resistance. In addition, a scrim layer produces a pattern on the exterior surface of facing 10 that is rectangular in shape, and that aids the installer in properly aligning the facing 10 on the insulation.

Moreover, additional layers of a metal-containing foil and a polymer could be added to the structure of Fig. 1 so long as the resulting product were sufficiently conformable, easy to cut and lightweight. Additional layers could be accommodated by making thinner the alternating metal-containing layers and polymer layers. In addition, it is to be understood that layer 22 of a pressure sensitive adhesive could be applied to polymer layer 18 rather than to a metal-containing layer, as illustrated in Fig. 1.

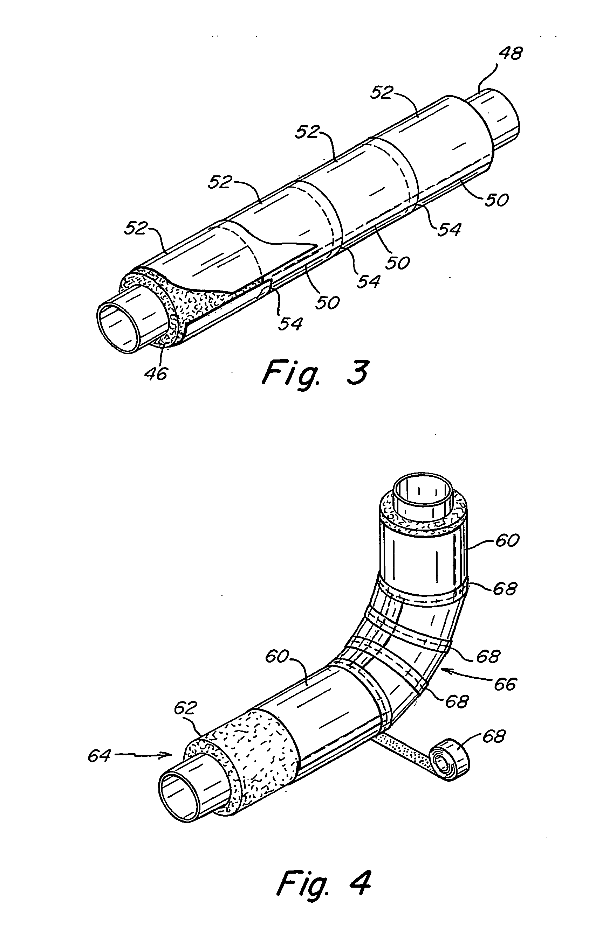

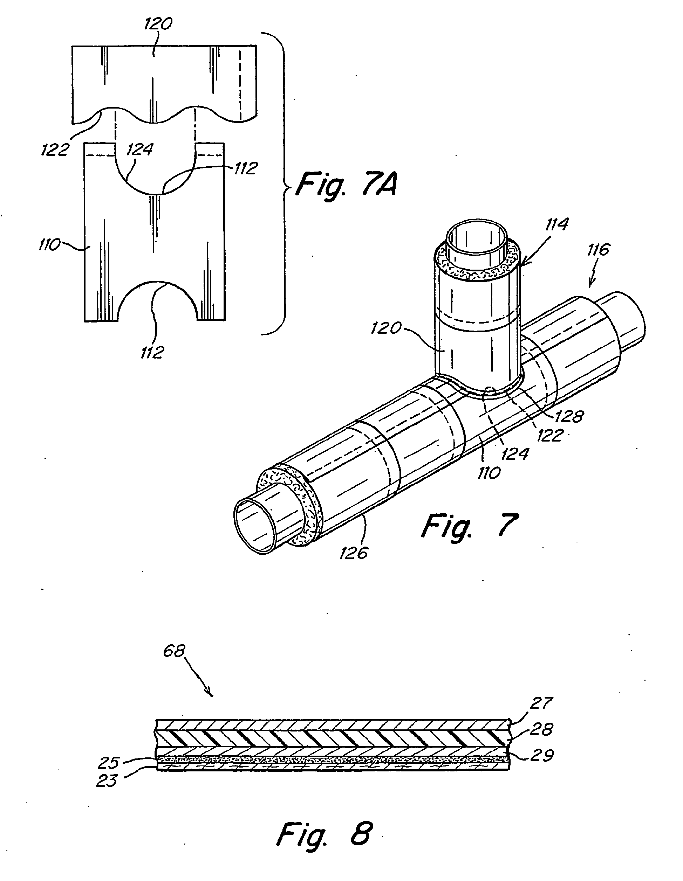

Methods of use of facing 10 in various applications will now be described with reference to Figs. 2-7. Before applying the facing 10 to any surface, it is important that the surface be dry, clean and free from dust, oil and grease or silicone. Facing 10 should be cut to size prior to application. Typically, cutting to size is performed at the jobsite so that the worker can measure the fluid conduit or duct work on the spot and cut the facing to the precise size desired. However, facing 10 could be precut at the factory, particularly for the portions used on curved pipes, as shown in Fig. 4, or on T-sections, as shown in Fig.7. Typically, facing 10 comes in large rolls which are unrolled and then cut with scissors, knives, box cutters or the like. It is important that the sheets of facing 10 be applied in an overlapping fashion, to provide a weather and vapor proof seal. A three inch (75 millimeter) overlap is recommended. When applying sheets of the facing 10, typically release liner 24 is peeled back from one edge and creased to expose adhesive layer 22 along that edge. This edge is then adhered to the surface to which the facing is to be applied, and thereafter, release liner 24 is peeled away from adhesive layer 22 as the facing is applied, such as by use of a spreader which smoothes the facing and the insulation surface.

One method for applying a sheet of facing 10 to rectangular duct work 30 is illustrated in Fig. 2. Typically, a sheet 32 of facing 10 is first applied to the bottom wall 31 of the duct 30 and the necessary overlap 34 is provided along walls 33 and 35. Typically, one edge of sheet 32 is first adhered to wall 33 or 35 to provide overlap 34, while the remainder of the sheet 32 remains covered by release liner 24. As sheet 32 is secured to wall 31, release liner 24 is peeled away from adhesive layer 22 just prior to adhering sheet 32 to wall 31. The process continues until all of wall 31 is covered, and the necessary overlap 34 is provided along the other of wall 33 or 35. Thereafter, another sheet 36 or 38 of facing is applied along respective wall 33 or 35. In both instances, the overlap 34 typically is provided along wall 37. Once walls 33 and 35 have been covered, top wall 37 is covered in the manner previously described with sheet 40. Sheet 40 need not overlap walls 33 and 35. Typically, no additional sealing tape is required for such rectangular duct work 30, or the like. This process is repeated along the entire axial or longitudinal length of the duct work 30 with additional sheets of facing 10 that overlap adjacent sheets in a longitudinal direction along circumferentially extending edges. This technique is particularly advantageous for large, flat horizontal ductwork upon the top wall 37 of which water tends to pool. By using a sheet on the top wall 37 that extends the width of the wall and overlaps walls 33 and 35, there are no seams into which the pooled water may seep.

An example of a method of application of this facing 10 to a straight circular pipe 48 is illustrated in Fig. 3. In this example, a series of sheets 52 having the same width and length are cut from rolls of the facing 10 prior to installation. Each sheet 52 is sized so that when wrapped about the insulation 46 on pipe 48, a suitable circumferential overlap 50 results along axially extending edges. Similarly, when successive sheets 52 are applied, there should be an overlap 54 between each successive sheet 52 in an axial direction along circumferentially extending adjacent edges. Each sheet 52 is otherwise applied in the same manner as described with respect to Fig. 2.

Figure 4 illustrates one example of application of facing to a curved pipe 64. Initially, sheets 60 are applied in a manner virtually identical to sheets 52 of Fig. 3. Successive sheets 60 are cut and applied in an overlapping manner to insulation 62 along the axial length of pipe 64. One difference between the method of Fig. 3 and that of Fig. 4 is that the sheet 60 applied to the curved portion 66 of pipe 64 typically would be narrower in width in an axial direction than sheets 60 covering the straight portion of the pipe 64, since facing 10 may not conform as easily to the shape of the curved portion 66 of the pipe 64 as it does to the straight portions because of a slight inherent rigidity caused by the multiple layers of foil and polymer.

To assist in conforming sheet 60 to the shape of the curved portion 66 of the pipe 64, in some applications, it may be desirable to apply a wrapping of a tape 68 at axially spaced intervals, as shown. Tape 68 typically is wrapped so as to overlap itself circumferentially and should be applied at whatever axial intervals are necessary to conform sheet 60 to the shape of curved portion 66. A tape 68 typically used for this purpose is a tape which has the same vapor barrier, weathering characteristics, and appearance as facing 10. In one example, as shown in Fig. 8, tape 68 is formed of a film 28 of a polymer disposed between two layers 27 and 29 of a metal-containing foil. The layers are laminated together using a laminating adhesive, like that used for facing 10. Like layers 12, 16 and 20 of facing 10, layers 27 and 29 could be formed of a metalized foil or a metal such as aluminum, while the polymer film 28 can be formed of the same materials as layers 14 and 18 of facing 10, such as polyester. Layers 27 and 29 and polymer film 28 could be of the same construction and thickness as respective layers 12 and 14 found in facing 10. Typically, a pressure sensitive adhesive layer 25, similar to adhesive layer 22, is disposed on layer 29, and a release liner 23, such as release liner 24 is applied to the layer 25 of pressure sensitive adhesive.

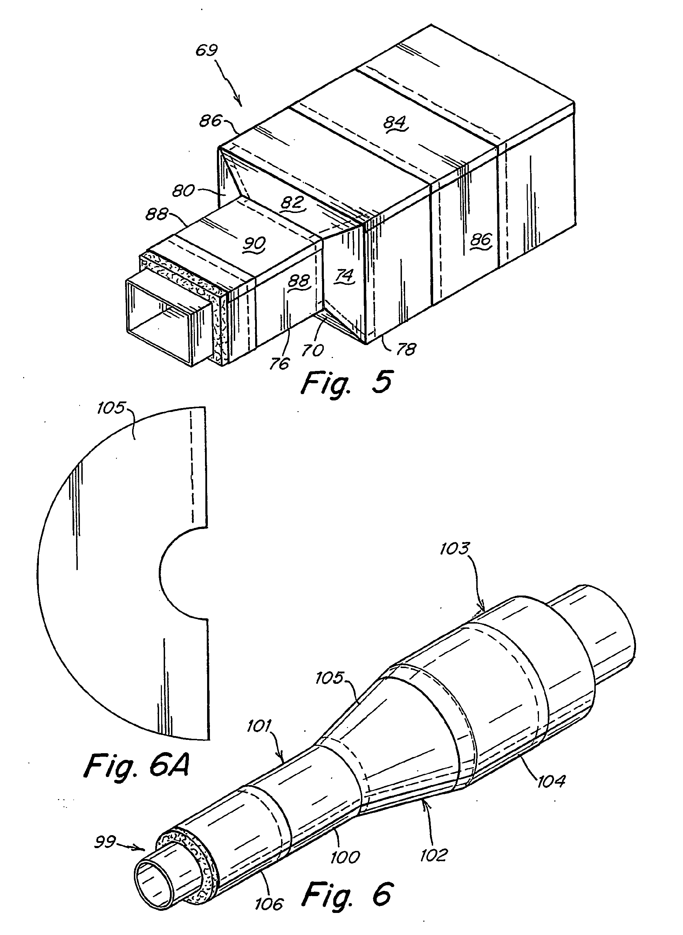

Fig. 5 illustrates one example of the application of facing 10 to a reduced section of duct work 69. A first trapezoidal segment of facing is cut and applied to surface 70. This trapezoidal segment should provide the desired overlap on each adjoining surface, including surfaces 74, 76, 78 and 80. Next, trapezoidal segments of facing are cut for surfaces 74 and 80, providing the necessary overlap along adjoining surfaces 70, 86, 88 and 82. Thereafter, a final trapezoidal segment of facing is cut and applied to surface 82 with overlap provided along surfaces 90, 84, 80 and 74. Next, sheets are cut having the necessary circumferential length to be wrapped about surfaces 76, 88 and 90 with the necessary axial overlap along circumferential edges as well as with the necessary overlap with each of the trapezoidal segments on surfaces 70, 80, 82 and 74 and adjacent sheets in an axial direction along circumferentially extending edges. Finally, sheets of facing are cut to be wrapped about surfaces 78, 84 and 86 to provide the necessary overlap with the trapezoidal segments on surfaces 80, 82, 74 and 70, with adjoining sheets in an axial direction along surfaces 84, 86 and 78, and with themselves in an axial direction along circumferentially extending edges. Each sheet is applied as previously described.

Fig. 6 illustrates one example of the application of facing 10 to a reduced pipe 99. Typically, a sheet of facing is first applied to surface 100 which is the reduced portion 101 of the pipe 99 just adjacent the tapered portion 102. A sheet of facing is cut and wrapped about surface 100 in the manner previously described. Thereafter, a C-shaped section 105 of facing (see Fig. 6A) is cut and applied to the tapered portion 102, providing overlap with the material on surface 100. Sheets of facing 10 then are cut and applied to surface 104 of the enlarged portion 103 of the pipe 99. These sheets are applied one adjacent another along the length of surface 104 so as to provide overlap with each other in an axial direction and to provide overlap with themselves as shown in a circumferential direction. Finally, sheets of facing are applied to surface 106 in overlapping relationship with one another along the axial length, and with themselves in a circumferential direction, as previously described.

Figs. 7 and 7A illustrate one example of the application of facing 10 to a T section of a pipe 116. A first sheet 110 is cut having the configuration shown in Fig. 7A. Sheet 110 is provided with cutouts 112 to accommodate the T section 114 of pipe 116. Thereafter, a sheet 120 is cut to the shape shown in Fig. 7A. Sheet 120 is then applied to section 114 in the manner shown, so that there is overlap between edge 122 of sheet 120 and edge 124 on sheet 110. Thereafter, additional overlapping sheets may be applied to segment 114, as well as to portion 126, as previously described with respect to a straight pipe in Fig. 3. Preferably a length of tape 128, like tape 68, is applied at the junction of edges 122 and 124 to effect a vapor tight seal.

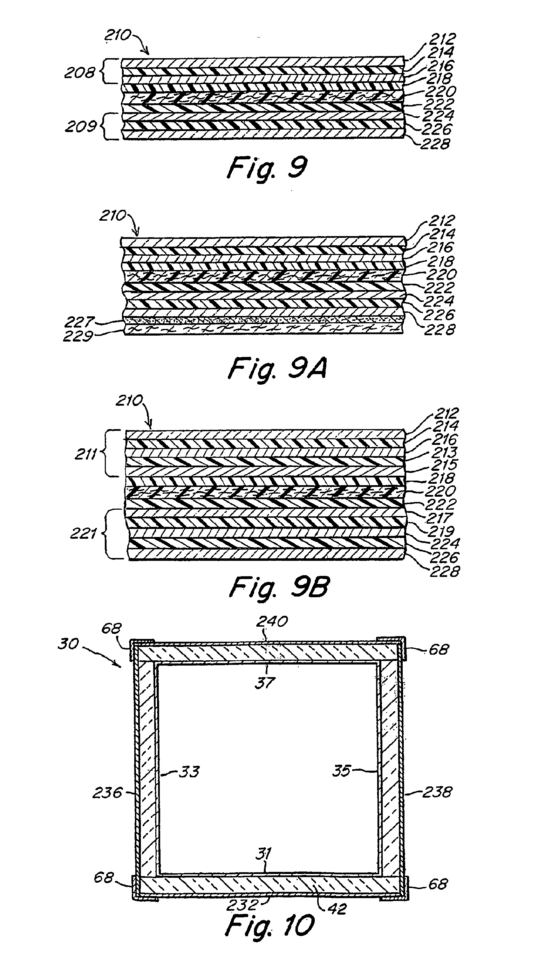

With reference to Fig. 9 of the drawings, another embodiment of the facing of this invention will now be described. This embodiment of the facing 210 includes a central layer, which may be a layer of fabric, and, on each side of the central layer, a structure having alternating layers of a metal-containing foil and a puncture-resistant polymer film bonded to the central layer by an extrusion layer. The layers of foil in the structure provide the desired vapor seal, weather resistance, and a desirable exterior appearance. The layers of polymer in the structure provide puncture and tear resistance, particularly with respect to birds and other animals. The central layer provides additional tear resistance, strength, and a desired textured appearance. The extrusion layers provide further strength. All of these layers of material together provide the desired fire resistance and resistance to flame spread. The central and extrusion layers together also provide additional stiffness to the facing, allowing it to retain a shape into which it has been formed, while still allowing the laminate to be easily cut using a hand-held implement, such as scissors, a knife or the like so that the product can be cut to size at the jobsite. As used herein, the term "hand-held implement" or "hand implement" means a device with a sharp edge that is manually operated or operable to cut a sheet of material, such as a knife or scissors or box cutter, and specifically excludes machinery, a saw or any implement that has a power assist. Moreover, the stiffness is not so great as to prevent the facing from being manually formed into the shape of the structure to be covered.

As discussed above, the number of layers of foil and polymer, the thickness of each of these layers and the actual materials used to form each of these layers are chosen to provide a facing which optimizes each of the desired properties. Moreover, if the central and extrusion layers are too thick, the material would be too rigid to be easily conformed. In addition, it is desirable to have the texture of the central layer, such as a fabric pattern, show through to the exposed surface of the facing to provide a finish and texture that will hide imperfections. Therefore, if the foil, polymer film and extrusion layers are too thick, the texture of the central layer will not be imposed upon the surface layers of the facing. Conformability of the facing to the fluid conduits should be considered as well, as discussed above.

The embodiments illustrated in Figs. 9, 9A and 9B represent a consideration of all of these factors and a balancing of the desired properties to achieve an optimal result. In one exemplary embodiment of facing 210, as shown in Fig. 9, there are two structures 208 and 209 separated by a central layer 220 and layers 218 and 222. Each structure has at least one layer of a metal containing foil and at least one polymer layer. In one embodiment, the outer layers 212 and 228 on opposite sides of facing 210 are formed of a metal-containing foil, layers 214 and 226 are formed of a puncture-resistant polymer, layers 216 and 224 are formed of a metal-containing foil, and layers 218 and 222 are formed of an extrusion of a polymeric material.

Foil layers 212, 216, 224 and 228 typically are formed of a metal foil. In one embodiment, layers 212, 216, 224 and 228 are each formed of an aluminum foil. It is understood, however, that other metal foils could be used for layers 212, 216, 224 and 228, such as a stainless steel foil, a titanium foil, a copper foil or the like. In another embodiment, foil layers 212, 216, 224 and 228 may be formed of a metalized foil. Metalized foils suitable for use in this invention include conventional, commercially available foils in which a metal, such as aluminum, steel or titanium, is vapor deposited on a substrate formed of a polymer such as polyvinyl fluoride (sold under the trademark TEDLAR™), polyethylene or biaxially oriented polypropylene. Since metalized foils tend to have pinholes resulting from handling during manufacture or from other causes, it is preferred that not all of layers 212, 216, 224 and 228 be formed of a metalized foil. Preferably, at least one of layers 212, 216, 224 and 228 is formed of a metal foil, such as aluminum. Typically, at least layer 212 is formed of a metal foil, such as aluminum, since this layer is exposed to the elements. However, it is understood that layers 212 and 228 could be formed of a metalized foil, so long as one of layers 216 and 224 is formed of a metal foil. If only one of layers 212, 216, 224 and 228 is formed of a metal foil, it is preferred that such a layer have a thickness of at least 9 microns to provide the desired impermeabilty to moisture.

Layers 214 and 226 typically are formed of a polyester film, although other polymer films such as polypropylene, polyethylene, polyurethane, NYLON®, DACRON®, KEVLAR® or polytetrafluoroethylene could be used.

Layer 220 may be formed of any suitable material which preferably can withstand high temperatures. It is desirable, but not necessary, that layer 220 have a textured surface structure that will show through layers 212, 214, 216, 218, 222, 224, 226 and 228 to the surface of layers 212 and 228 so as to provide a texture to the surface of layer 212, and the surface of layer 228. The resulting textured surface tends to hide minor surface imperfections. Moreover, while the texture does show through, the resulting surface of layers 212 and 228 is relatively flat, which permits tight adhesion of pressure-sensitive tapes to provide a watertight bond. In one embodiment, layer 220 is formed of a fabric. One example of a suitable material for layer 220 is a high-density, polyethylene fabric. Another example of a suitable material for layer 220 is a NYLON® fabric. In one example, the fabric is a woven structure, although a knitted structure could also be used. A woven fabric suitable for use in layer 220 may, in one embodiment, be made using a 3 mm wide tape formed of high-density polyethylene film. The tape is woven to form a fabric structure in a conventional manner. In another embodiment, layer 220 may be formed of non-woven glass fibers which are compressed together. In yet another embodiment, layer 220 could be formed of a closed cell foam, such as an acrylic foam or a polyethylene foam. Such a foam layer would be especially suitable for applications in which an additional insulation effect is desired for facing 210. A layer of foam could also be used in addition to or together with a fabric layer for layer 220.

Layers 218 and 222 are polymer extrusions that serve to bond layer 220 to respective layers 216 and 224 as well as to provide additional strength, rigidity and conformability to the structure of facing 210. One material that may be used for these extrusion layers is a low-density polyethylene. One advantage of using low-density polyethylene for layers 218 and 222, when a non-woven fiberglass or a high-density polyethylene material is used for layer 220, is that low-density polyethylene melts at a lower temperature than high-density polyethylene or fiberglass and therefore can be used to bond layer 220 to layers 216 and 224 without degradation of layer 220. Other suitable materials which could be used for layers 218 and 222 include ethylene-vinyl acetate, ethylene acrylic acid, ethylene-methyl acrylate, linear low density polyethylene and SURLYN®.

Layers 212, 214 and 216 and layers 224, 226 and 228 typically are laminated or bonded together such as by an adhesive. This laminating adhesive could be a pressure-sensitive adhesive or any conventional, flame-retardant adhesive which is suitable for laminating a metal-containing foil to a polymer, and which has high strength and durability. In one embodiment, a conventional urethane laminating adhesive is used, such as a dual component, polyurethane adhesive. One example of a suitable adhesive is that sold under the name BOSCADUR™ and purchased from the Bostik™ Chemical Division of the Ernhardt™ Fastener Group in Middleton, Massachusetts 01949. Another suitable adhesive is sold under the name ADCOTE™ by Rohm & Hass. A typical coating weight for these adhesives is about 2 to about 10 grams per square meter. Typical thicknesses of these laminating adhesives are about 0.3 to about 2.0 mils. (0.008-0.051 mm).

In one embodiment, where layers 212, 216, 224 and 228 are formed of an aluminum foil, each layer is about 25 microns in thickness. However, thicknesses as low as 5 microns also would be suitable for many applications, while thicknesses as great as 50 microns still could be acceptable, so long as facing 210 could be cut with a hand-held implement, such as a knife or scissors or the like, so long as facing 210 is still sufficiently manually conformable to be used to cover most types of insulation in most applications, and so long as facing 210 retains its shape once formed.

In one embodiment, where layers 214 and 226 are formed of a polyester film, layers 214 and 226 are about 23 microns in thickness. However, it is to be understood, that layers 214 and 226 could be thinner or thicker than 23 microns, depending upon the degree of puncture and tear resistance desired, and the material used. In fact, layers 214 and 226 could be as thin as 5 microns in certain applications, or as thick as 50 microns in other applications, so long as the resulting facing 210 is still adequately conformable to the shape of the fluid conduit, and the insulation surrounding it, so long as facing 210 can still be cut with a hand-held implement such as scissors or a knife or the like, and so long as facing 210 holds its shape once formed.

In most applications, facing 210 of this invention does not require a pressure-sensitive adhesive for application to insulation or other surfaces. Typically, facing 210 is manually curved or bent into the shape desired, and because facing 210 holds its shape once curved or bent, facing 210 does not require a pressure-sensitive adhesive to hold it in place. However, in certain applications, such as covering duct board or the like, a pressure-sensitive adhesive may be desired. In another embodiment, as illustrated in Fig. 9A, the structure of Fig. 9 may be modified by the application of a layer 227 of a pressure-sensitive adhesive to layer 228. Typically, prior to installation, layer 227 of a pressure-sensitive adhesive is covered by a release liner 229. Layer 227 of a pressure sensitive adhesive can be any commercially available, pressure-sensitive adhesive that is suitable for bonding to a metal or metalized foil and to kraft paper or other insulation surfaces, and that maintains it integrity under low and high temperature conditions. Examples of such suitable pressure-sensitive adhesives are disclosed in U.S. Patent No. 4,780,347.
In particular, one suitable adhesive is a pressure-sensitive, acrylic adhesive, which, when cured, approaches a 100% acrylic compound in which substantially all solvents have been removed. This adhesive can, however, tolerate up to 1% solvents after curing and still perform as desired. When cured, layer 227 formed of this acrylic adhesive typically has a thickness of between about 1.0 and 5.0 mils (0.025-0.013 mm) and a coating weight of about 50 grams per square meter. This particular acrylic adhesive is especially desirable, since it remains tacky and usable at temperatures as low as -17°F (-27°C) and as high as 284°F (140°C).

Release liner 229 can be any conventional release liner suitable for use with an acrylic adhesive. A typical release liner is a silicon-coated, natural kraft paper release liner.

In one particular embodiment of Figs. 9 and 9A, each of layers 212, 216, 224 and 228 is formed of an aluminum foil. In this particular embodiment, the thickness of each layer is about the same, or about 25 microns. It is understood, of course, that thicker or thinner layers of aluminum foil may be used for layers 212, 216, 224 and 228. Where a polyester material is used for layers 214 and 226, in one embodiment, the thickness of each layer 214 and 226 may be the same, and may be about 23 microns. It is understood, of course, that variations may be used in which layers 214 and 226 have different thicknesses.

In other embodiments, where a material other than polyester is used for layers 214 and 226, layers 214 and 226 may be either thicker or thinner than when polyester is used. For example, if layers 214 and 226 are formed of NYLON®, DACRON® or KEVLAR® or the like, these layers may be 30 microns in thickness.

In the embodiment of Figs. 9 and 9A, in which layer 220 is formed of a high-density polyethylene fabric, layer 220 has a weight of about 60 grams per meter squared, in one embodiment. Where a fiberglass non-woven material is used for fabric layer 220, in one embodiment, layer 220 has a weight of about 50 grams per square meter. In another embodiment, where layers 218 and 222 are formed of a polyethylene extrusion, layers 218 and 222 may have a weight of about 20 grams per square meter to provide the desired stiffness and conformability.

Fig. 9B illustrates another embodiment of the facing 210 of this invention. Like numbers are used for like layers or parts where appropriate. In Fig. 9B, additional layers of a metal or metalized foil and a polymer are provided for additional puncture-resistance and increased resistance against tearing, as well as for further assurance that facing 210 is vapor proof. In the embodiment of Fig. 9B, an additional layer of a polymer and an additional layer of a foil are disposed on either side of central layer 220. The embodiment of Fig. 9B includes a first structure 211 including outer foil layer 212, polymer layer 214, foil layer 216, polymer layer 213 and foil layer 215, extrusion layer 218, central layer 220, extrusion layer 222, and a second structure 221 including foil layer 217, polymer layer 219, foil layer 224, polymer layer 226 and foil layer 228. As previously discussed, layers 212, 216, 215, 217, 224 and 228 typically are formed either of a metalized foil or of a metal foil. In one embodiment, each of these layers is formed of an aluminum foil. As noted previously, other metal foils could be used for these layers, such as a stainless steel foil, a titanium foil, a copper foil, or the like. Suitable metalized foils may also be used, as previously discussed. Layers 214, 213, 219, and 226 typically are formed of a polyester film, although other polymer films such as polypropylene, polyethylene, polyurethane, NYLON®, DACRON®, KEVLAR® or polytetrafluorethylene could be used. Layers 218, 220 and 222 are identical in all material respects to layers 218, 220, and 222 of Figs. 9 and 9A. As discussed with respect to the embodiments of Figs. 9 and 9A, layers 212, 214, 216, 213, 215, and layers 217, 219, 224, 226, and 228 are all typically laminated together such as by an adhesive which could be any conventional adhesive as described with respect to Figs. 9 and 9A. Typically, although not necessarily , no pressure sensitive adhesive is applied to layer 228 of Fig. 9B. However, if a layer of pressure sensitive adhesive is desired, the same pressure sensitive adhesive used in conjunction with the embodiment of Fig. 9A may be applied on the outer surface of layer 228, along with an associated release liner.

In one particular embodiment of Fig. 9B, to achieve the combination of a desired barrier to vapor, stiffness, conformability and cutability by a hand-held implement, the layers of Fig. 9B may have the following compositions and thicknesses. It is understood, however, that the invention is not intended to be limited by this particular structure or by the thicknesses and compositions of the respective layers as set forth herein. In this particular embodiment, layers 212, 216, 215, 217, 224 and 228 may all be formed of an aluminum foil. Layer 212 is designed to be exposed to the elements, and may have a thickness of about 25 microns. The remaining layers of aluminum foil, layers 216, 215, 217, 224 and 228, each may have a thickness of about 9 microns. Layers 214, 213, 219 and 226, in this embodiment, are typically formed of polyester, and each layer typically has the same thickness, which may be about 23 microns. Layers 218 and 222 typically are formed of a low density polyethylene extrusion, while layer 220, typically, in this embodiment, is formed of a high density polyethylene woven fabric, as previously discussed. Layers 218 and 222 typically have a weight of about 20 grams per square meter, while fabric layer 220 has a weight of about 60 grams per square meter.

In the particular embodiment of Fig. 9B described immediately above, the total thickness of the facing 210 is about 350 microns. The weight of this particular embodiment is about 450 grams per square meter. The tensile strength as measured according to PSTC-31 is about 740 newtons per 25 millimeter width. The elongation at break is about 35 percent. The puncture resistance as measured in accordance with ASTM D-1000 is about 40 kilograms, while the tear strength as measured in accordance with ASTM D-624 is about 7.60 kilograms. The maximum continuous temperature tolerance is about 80 degrees centigrade. This embodiment of facing 210 has no permeability to water vapor, has a chemical and ultraviolet resistance which is comparable to that of aluminum and meets all flamability requirements for bulkhead, wall and ceiling linings.

For the particular embodiment of Fig. 9B described immediately above, a preferred flexural modulus as measured in accordance with ASTM D790-03, section 7.2.2, using procedure A, is greater than about 200 X 10³ psi (19,8 Kbar), with a preferred range of about 200 X 10³ psi (13,8 Kbar) to about 500 X 10³ psi (34,5 Kbar). In one embodiment using a 368 micron thick specimen, a crosshead motion of 2.92 mm/minute, a deflection of 14.6mm, and a support span of 25.4mm, the flexural modulus was measured to be about 280 X 10³ psi (19,3 Kbar) in the cross direction and 236 X 10³ psi (16,3 Kbar) in the machine direction. The loading nose and supports had a diameter of about 12.6mm. In each instance the flexural strain was 0.05, while the flexural stress was 14.0 X 10³ psi (965 bar) for the cross direction and 11.8 X 10³ psi (814 bar) for the machine direction.

The embodiments of Figs. 9, 9A and 9B typically may all be manufactured in substantially the same fashion. In one example, the first structure 208 of facing 210 comprised of the layers of foil and polymer, such as layers 212, 214, and 216 of Figs. 9 and 9A, is separately bonded together. The second structure 209 comprised of layers 224, 226 and 228 of Figs. 9 and 9A, also is separately bonded together. In the embodiment of Fig. 9B, the first structure 211 comprised of layers 212, 214, 216, 213 and 215 is separately bonded together, while the second structure 221 comprised of layers 217, 219, 224, 226 and 228 is also separately bonded together. In each instance, a laminating adhesive, as discussed above, such as a two-component polyurethane adhesive, coats the confronting surfaces of the layers to be bonded. Once surfaces of the layers are coated, the solvent, which is very volatile, is completely removed by evaporation before the surfaces to be bonded are contacted with one another. It is preferred that complete evaporation of the solvent is achieved before any bond becomes gas tight, to prevent any damage to the layers. Once the solvent has been evaporated, layers 212 and 216 are placed on opposite sides of layer 214, while layers 224 and 228 are placed on opposite sides of layer 226, for the embodiment of Fig. 9. In the embodiment of Fig. 9B, once the solvent has been removed, layers 212, 214, 216, 213 and 215 are aligned and arranged in the order shown in Fig. 9B, as are layers 217, 219, 224, 226, and 228. These structures of alternating foil and polymer layers are typically heated, rolled onto large rolls and stored, such as for about one week, to allow complete polymerization of the adhesive. Thereafter, layer 220 is coated on each side with a molten extrusion. The structure comprising layers 213, 214, and 216 is bonded at layer 216 to extrusion layer 218 on one side of layer 220, while the structure comprising layers 224, 226, and 228 is bonded to extrusion layer 222 at layer 224 on the other side of layer 220, for the embodiment of Fig. 9. With respect to the embodiment of Fig. 9B, the structure formed of layers 212, 214, 216, 213, and 215 is bonded at layer 215 to extrusion layer 218 on one side of layer 220, while the structure formed of layers 217, 219, 224, 226, and 228 is bonded along layer 217 to extrusion layer 222 on the other side of layer 220. Once the extrusion layers 218 and 222 are cooled and the resulting structure is compressed, such as by calendaring or by a machine press or the like, the resulting structure is complete.

Methods of use of facing 210 in various applications will now be described with reference to Figs. 10-15. The same numbers in Figs. 10-15 are used for like parts of Figs. 2-7. Before applying the facing 210 to any surface, the surface preferably is dry, clean and free from dust, oil and grease or silicone. Facing 210 should be cut to size prior to application. Typically, cutting to size is performed at the jobsite so that the worker can measure the fluid conduit or duct work on the spot and cut the facing to the precise size desired. Typically, facing 210 comes in large rolls which are unrolled and then cut with scissors, knives, box cutters or other hand-held implements. The sheets of facing 210 typically are applied in an abutting fashion where an edge of each sheet abuts the edges of adjacent sheets. Also, when wrapped about a conduit, the free edges of each sheet typically abut one another. The sheets of facing 210 could be applied in an overlapping fashion and if so, three inch (75 millimeter) overlap is preferred, in one embodiment. However, overlap usually is not necessary or desired. In each example illustrated below, the sheets of facing 210 are bent or otherwise manipulated to conform them to the surface to be covered. Because of their inherent rigidity, these sheets of facing 210 will retain their shape once formed and will tend to stay in place on the insulation surface or conduit being covered, once placed. Tape 68 typically is wrapped about the abutting edges of adjacent sheets of facing 210 to hold them in place and to seal all joints against water and water vapor.

One method for applying a sheet of facing 210 to rectangular duct work 30 is illustrated in Fig. 10. As in the method of Fig. 2, typically, one sheet 232 of facing 210 is applied to the bottom wall 31 of the duct 30, sheets 236 and 238 of facing are applied along respective walls 33 and 35, and top wall 37 is covered with sheet 240. Typically, strips of a tape 68 may be used to seal all joints between abutting edges of sheets of facing 210. This process is repeated along the entire axial or longitudinal length of the duct work 30 with additional sheets of facing 210 that abut adjacent sheets in a longitudinal direction along circumferentially extending edges. This technique is particularly advantageous for large, flat horizontal ductwork upon the top wall 37 of which water tends to pool. By using a sheet on the top wall 37 that extends the width of the wall, there are no seams into which the pooled water may seep.

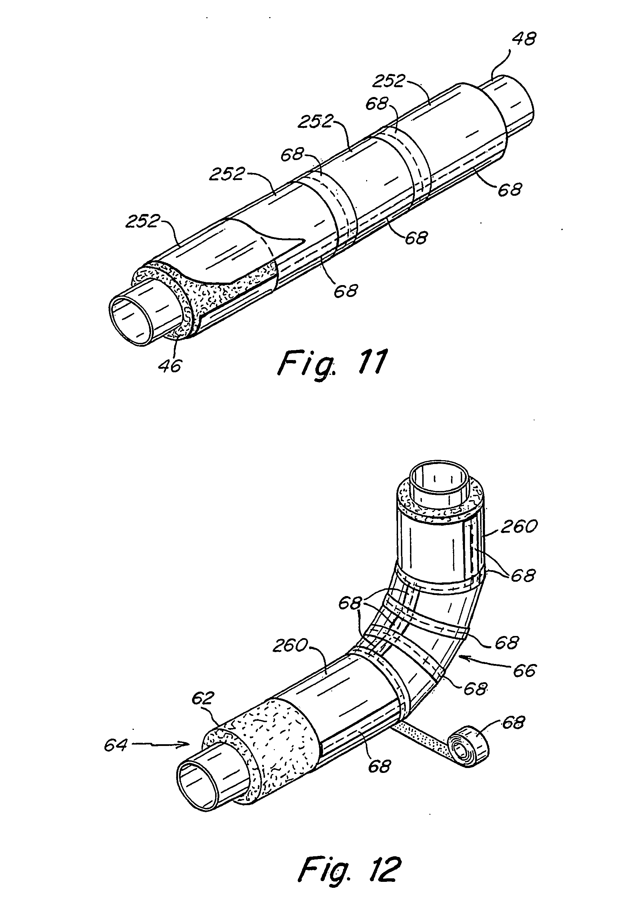

An example of a method of application of this facing 210 to a straight circular pipe 48 is illustrated in Fig. 11. As in the method of Fig. 3, a series of sheets 252 having the same width and length are cut from rolls of the facing 210 prior to installation. Each sheet 252 is sized so that when wrapped about the insulation 46 on pipe 48, axially extending edges are in abutment. Similarly, when successive sheets 252 are applied, adjacent edges on each successive sheet 252 in an axial direction should be in abutting relation. Each sheet 252 is otherwise applied in the same manner as described with respect to Fig. 10, and the joints between abutting sheets and portions of the same sheet may be sealed with a strip of tape 68.

Figure 12 illustrates one example of the application of facing 210 to a curved pipe 64. As in the method of Fig. 4, initially, sheets 260 are applied in a manner virtually identical to sheets 252 of Fig. 11. Successive sheets 260 are cut and applied in an abutting relation to insulation 62 along the axial length of pipe 64. One difference between the method of Fig. 11 and that of Fig. 12 is that the sheets 260 applied to the curved portion 66 of pipe 64 typically are narrower in width in an axial direction than sheets 260 covering the straight portion of the pipe 64, since facing 210 may not conform as easily to the shape of the curved portion 66 of the pipe 64 as it does to the straight portions because of its inherent rigidity. To assist in conforming sheet 260 to the shape of the curved portion 66 of the pipe 64, and to seal all joints between abutting sheets of facing 210, it is desirable to apply a wrapping of a tape 68 at axially spaced intervals and over abutting edges, as shown. Tape 68 typically is wrapped so as to overlap itself circumferentially and should be applied at whatever axial intervals are necessary to conform sheet 260 to the shape of curved portion 66.

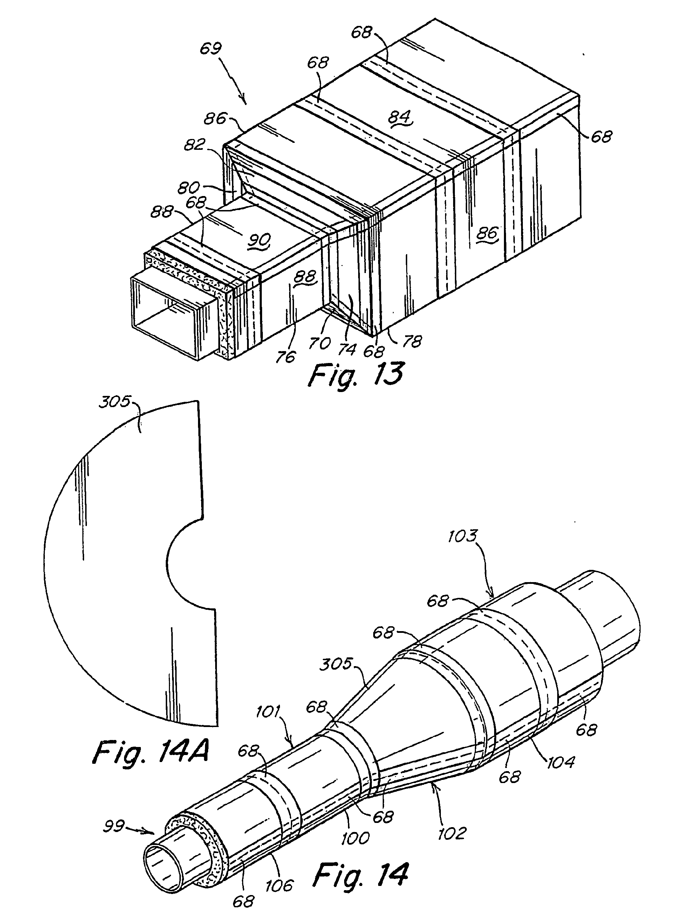

Fig. 13 illustrates one example of the application of facing 210 to a reduced section of duct work 69. As in the method of Fig. 5, a first trapezoidal segment of facing is cut and applied to surface 70. Next, trapezoidal segments of facing are cut for surfaces 74 and 80. Thereafter, a final trapezoidal segment of facing is cut and applied to surface 82. Next, sheets are cut having the necessary circumferential length to be wrapped about surfaces 76, 88 and 90. Finally, sheets of facing are cut to be wrapped about surfaces 78, 84 and 86. Each sheet is applied as previously described in abutting relation with adjoining sheets, and the abutting edges are sealed with tape 68.

Fig. 14 illustrates one example of the application of facing 210 to a reduced pipe 99. Typically, a sheet of facing is first applied to surface 100 which is the reduced portion 101 of the pipe 99 just adjacent the tapered portion 102. A sheet of facing is cut and wrapped about surface 100 in the manner previously described. Thereafter, a C-shaped section 305 of facing (see Fig. 14A) is cut and applied to the tapered portion 102. Sheets of facing 210 then are cut and applied to surface 104 of the enlarged portion 103 of the pipe 99. These sheets are applied one adjacent another in abutting relation along the length of surface 104. Finally, sheets of facing are applied to surface 106 in abutting relation with one another along the axial length, and in abutting relation along axially extending edges with themselves. Abutting edges are again sealed with tape 68.

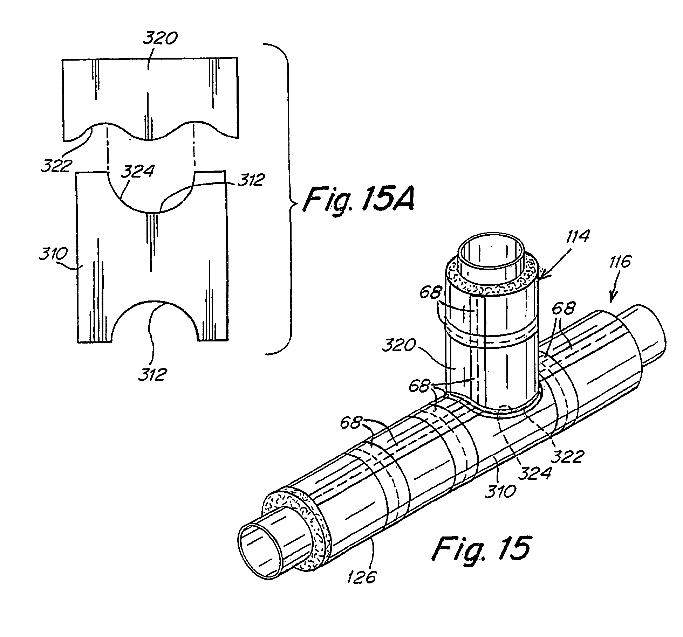

Figs. 15 and 15A illustrate one example of the application of facing 210 to a T section of a pipe 116. A first sheet 310 is cut having the configuration shown in Fig. 15A. Sheet 310 is provided with cutouts 312 to accommodate the T section 114 of pipe 116. A sheet 320 is cut to the shape shown in Fig. 15A. Sheet 320 is then applied to section 114 in the manner shown. Thereafter, additional abutting sheets may be applied to section 114, as well as to portion 126, as previously described with respect to a straight pipe in Fig. 11. Preferably a length of tape 68 is applied at the junction of edges 322 and 324 to effect a vapor tight seal and all other abutting edges are similarly sealed with tape 68.

The facing 10 and 210 of this invention, when used with insulation for a fluid conduit, such as a pipe or duct work, provides a vapor tight seal about the insulation and duct work or pipe that is weather resistant, puncture and tear resistant, sufficiently flexible, easily cut, and aesthetically pleasing. Facing 10 and 210 can be applied in almost all weather conditions, and in a temperature range from minus 17° to plus 284° Fahrenheit (minus 27° to plus 140°C). The resulting sealed pipe or duct work is fire resistant, and any flame would spread very slowly. Facing 10 and 210 can be easily repaired onsite, and has a long life.

The method of this invention provides an easy technique for applying facing to insulation disposed on duct work or on pipes and can be mastered with very little training or skill. Installation is fast, clean and safe. Only scissors, a knife or the like are required as tools, and all work can be done at the job site. No prior or cutting or assembly is required.

Having thus described several aspects of at least one embodiment of this invention, it is to be appreciated that various alterations, modifications, and improvements will readily occur to those skilled in the art. Such alterations, modifications, and improvements are intended to be part of this disclosure, and are intended to be within the scope of the invention. Accordingly, the foregoing description and drawings are by way of example only.

## Claims

1. A combination of a covering for insulation and insulation, said combination comprising:
a covering material including multiple layers of a metal-containing foil and multiple layers of a puncture resistant, polymer film, said layers of puncture resistant,
polymer film alternating with said layers of a metal-containing foil;
a layer of insulation; and
a layer of pressure-sensitive adhesive bonding said covering material to said layer of insulation.

2. The combination of claim 1, wherein the covering material comprises:
a central layer;
a polymer extrusion layer disposed on each side of said central layer; and
two structures, one structure affixed to each polymer extrusion layer, each structure comprising alternating layers of a metal-containing foil and a puncture-resistant polymer film;
a layer of insulation; and
a layer of pressure-sensitive adhesive bonding said covering material to said layer of insulation.

3. The combination of claim 1, wherein the covering material comprises:
a first layer of a metal-containing foil;
a second layer of a metal-containing foil;
a third layer of a metal-containing foil;
a first layer of a puncture resistant polymer film disposed between said first and said second layers of metal-containing foil; and
a second layer of a puncture resistant polymer film disposed between said second and said third layers of metal-containing foil.

4. The combination as recited in anyone of claims 1 to 3, wherein one of said layers of a metal-containing foil is disposed on an exposed outer surface of said covering material on a side of said covering material opposite said layer of insulation, said one of said layers of a metal-containing foil being uncovered.

5. The combination as recited in claim 3 wherein at least said first layer of metal-containing foil is a sheet of aluminum foil having a thickness in the range of from 5 microns to 50 microns; and wherein at least said first layer of a puncture resistant polymer film is formed of polyester having a thickness in the range of 10 microns to 50 microns.

6. The combination as recited in anyone of claims 3 or 5 wherein said first and said second layers of a metal-containing foil are bonded to the first layer of a puncture resistant polymer film by an adhesive, and wherein said second and said third layers of a metal-containing foil are bonded to said second layer of a puncture resistant polymer film by an adhesive.

7. The combination as recited in anyone of claims 3, 5 or 6 further comprising:
a layer of a pressure sensitive adhesive applied to said third layer of a metal-containing foil; and
a release liner covering said layer of a pressure sensitive adhesive.

8. The combination as recited in anyone of claims 3, 5, 6 or 7 further comprising a protective layer disposed on said first layer of a metal-containing foil, said protective layer being resistant to ultraviolet radiation, acid and salt.

9. The combination as recited in claim 2, wherein the central layer comprises a woven fabric, polyethylene, or a non-woven fiberglass material.

10. The combination as recited in anyone of claims 2 or 9, wherein the extrusion is formed of a low density polyethylene.

11. The combination as recited in anyone of claims 2, 9 or 10, wherein at least one of said structures comprises three layers of a metal containing foil and two layers of a puncture resistant polymer film, at least one layer of a metal containing foil being disposed on an outer surface of the covering.

12. A method for protecting insulation from damage due to moisture and other environmental factors, said method comprising:
providing a covering material having a metal-containing layer on one surface and a layer of a pressure sensitive adhesive on a second, opposite surface, said covering material including multiple layers of a metal-containing foil and multiple layers of a puncture resistant, polymer film, said layers of puncture resistant, polymer film alternating with said layers of a metal-containing foil;
manually cutting from the covering material an appropriately sized first sheet at a job site;
removing a release liner covering the pressure sensitive adhesive layer of the first sheet;
applying the first sheet to the insulation so that the adhesive layer bonds to the insulation and the metal-containing layer is exposed; and applying additional sheets of covering material directly to the insulation such that each sheet of covering material overlaps sheets of covering material directly adjacent thereto.

13. The method of claim 12, wherein the covering material comprises
a central layer;
a polymer extrusion layer disposed on each side of said central layer; and
two structures, one structure affixed to each polymer extrusion layer, each structure comprising alternating layers of a metal-containing foil and a puncture-resistant polymer film;
a layer of insulation; and
a layer of pressure-sensitive adhesive bonding said covering material to said layer of insulation.

14. The method of claim 12, wherein the covering material comprises
a first layer of a metal-containing foil;
a second layer of a metal-containing foil;
a third layer of a metal-containing foil;
a first layer of a puncture resistant polymer film disposed between said first and said second layers of metal-containing foil; and
a second layer of a puncture resistant polymer film disposed between said second and said third layers of metal-containing foil.

## Patentansprüche

1. Kombination aus einer Verkleidung zur Isolierung und einer Isolierung, wobei die Kombination Folgendes aufweist:
ein Verkleidungsmaterial mit mehreren Schichten aus einer metallhaltigen Folie und mehreren Schichten aus einem durchstoßfesten Polymerfilm, wobei sich die Schichten aus durchstoßfestem Polymerfilm mit den Schichten aus metallhaltiger Folie abwechseln;
eine Isolierschicht; und
eine Schicht aus druckempfindlichem Klebstoff, die das Verkleidungsmaterial an die Isolierschicht bindet.

2. Kombination nach Anspruch 1, wobei das Verkleidungsmaterial Folgendes aufweist:
eine mittlere Schicht;
eine Polymerextrusionsschicht, die an jeder Seite der mittleren Schicht angeordnet ist; und
zwei Strukturen, wobei eine Struktur an jeder Polymerextrusionsschicht befestigt ist, wobei jede Struktur abwechselnde Schichten aus einer metallhaltigen Folie und einem durchstoßfesten Polymerfilm aufweist;
eine Isolierschicht; und
eine Schicht aus druckempfindlichem Klebstoff, die das Verkleidungsmaterial an die Isolierschicht bindet.

3. Kombination nach Anspruch 1, wobei das Verkleidungsmaterial Folgendes aufweist:
eine erste Schicht aus metallhaltiger Folie;
eine zweite Schicht aus metallhaltiger Folie;
eine dritte Schicht aus metallhaltiger Folie;
eine erste Schicht aus durchstoßfestem Polymerfilm, die zwischen der ersten und der zweiten Schicht aus metallhaltiger Folie angeordnet ist; und
eine zweite Schicht aus durchstoßfestem Polymerfilm, die zwischen der zweiten und der dritten Schicht aus metallhaltiger Folie angeordnet ist.

4. Kombination nach einem der Ansprüche 1 bis 3, wobei eine der Schichten aus metallhaltiger Folie an einer freiliegenden Außenfläche des Verkleidungsmaterials an einer Seite des Verkleidungsmaterials gegenüber der Isolierschicht angeordnet ist, wobei die eine der Schichten aus metallhaltiger Folie nicht verkleidet ist.

5. Kombination nach Anspruch 3, wobei mindestens die erste Schicht aus metallhaltiger Folie eine Lage Aluminiumfolie mit einer Dicke im Bereich von 5 Mikron bis 50 Mikron ist; und wobei mindestens die erste Schicht aus durchstoßfestem Polymerfilm aus Polyester mit einer Dicke im Bereich von 10 Mikron bis 50 Mikron gebildet ist.

6. Kombination nach einem der Ansprüche 3 bis 5, wobei die erste und die zweite Schicht aus metallhaltiger Folie an die erste Schicht aus durchstoßfestem Polymerfilm durch einen Klebstoff gebunden sind und wobei die zweite und die dritte Schicht aus metallhaltiger Folie an die zweite Schicht aus durchstoßfestem Polymerfilm durch einen Klebstoff gebunden sind.

7. Kombination nach einem der Ansprüche 3, 5 oder 6, des Weiteren aufweisend:
eine Schicht aus druckempfindlichem Klebstoff, der auf die dritte Schicht aus metallhaltiger Folie aufgetragen ist; und
eine Trennfolie, die die Schicht aus druckempfindlichem Klebstoff bedeckt.

8. Kombination nach einem der Ansprüche 3, 5, 6 oder 7, des Weiteren aufweisend eine Schutzschicht, die auf der ersten Schicht aus metallhaltiger Folie angeordnet ist, wobei die Schutzschicht gegen Ultraviolettstrahlung, Säure und Salz beständig ist.

9. Kombination nach Anspruch 2, wobei die mittlere Schicht ein Gewebe-, Polyethylen- oder ein Fiberglasvliesmaterial aufweist.

10. Kombination nach einem der Ansprüche 2 oder 9, wobei die Extrusion aus Polyethylen geringer Dichte gebildet wird.

11. Kombination nach einem der Ansprüche 2, 9 oder 10, wobei mindestens eine der Strukturen drei Schichten aus metallhaltiger Folie und zwei Schichten aus durchstoßfestem Polymerfilm aufweist, wobei mindestens eine Schicht aus metallhaltiger Folie an einer Außenfläche der Verkleidung angeordnet ist.

12. Verfahren zum Schützen einer Isolierung vor einer Beschädigung durch Feuchtigkeit und andere Umweltfaktoren, wobei das Verfahren Folgendes aufweist:
Vorsehen eines Verkleidungsmaterials mit einer metallhaltigen Schicht an einer Oberfläche und einer Schicht aus einem druckempfindlichen Klebstoff auf einer zweiten, gegenüberliegenden Oberfläche, wobei das Verkleidungsmaterial mehrere Schichten aus metallhaltiger Folie und mehrere Schichten aus durchstoßfestem Polymerfilm enthält, wobei sich die Schichten aus durchstoßfestem Polymerfilm mit den Schichten aus metallhaltiger Folie abwechseln;
manuelles Schneiden einer ersten Lage passender Größe aus dem Verkleidungsmaterial auf der Baustelle;
Entfernen einer Trennfolie, die die druckempfindliche Klebstoffschicht der ersten Lage bedeckt;
Anbringen der ersten Lage an der Isolierung, so dass die Klebstoffschicht an der Isolierung haftet und die metallhaltige Schicht freiliegt; und
Anbringen weiterer Lagen aus Verkleidungsmaterial direkt auf der Isolierung, so dass jede Lage Verkleidungsmaterial unmittelbar benachbarte Lagen aus Verkleidungsmaterial überlappt.

13. Verfahren nach Anspruch 12, wobei das Verkleidungsmaterial Folgendes aufweist:
eine mittlere Schicht;
eine Polymerextrusionsschicht, die an jeder Seite der mittleren Schicht angeordnet ist; und
zwei Strukturen, wobei eine Struktur an jeder Polymerextrusionsschicht befestigt ist, wobei jede Struktur abwechselnde Schichten aus einer metallhaltigen Folie und einem durchstoßfesten Polymerfilm aufweist;
eine Isolierschicht; und
eine Schicht aus druckempfindlichem Klebstoff, die das Verkleidungsmaterial an die Isolierschicht bindet.

14. Verfahren nach Anspruch 12, wobei das Verkleidungsmaterial Folgendes aufweist:
eine erste Schicht aus metallhaltiger Folie;
eine zweite Schicht aus metallhaltiger Folie;
eine dritte Schicht aus metallhaltiger Folie;
eine erste Schicht aus durchstoßfestem Polymerfilm, die zwischen der ersten und der zweiten Schicht aus metallhaltiger Folie angeordnet ist; und
eine zweite Schicht aus durchstoßfestem Polymerfilm, die zwischen der zweiten und der dritten Schicht aus metallhaltiger Folie angeordnet ist.

## Revendications

1. Combinaison d'un revêtement pour isolation et d'une isolation, ladite combinaison comprenant :
un matériau de revêtement comprenant de multiples couches d'une feuille métallique et de multiples couches d'un film polymère résistant à la perforation, lesdites couches de film polymère résistant à la perforation alternant avec lesdites couches d'une feuille métallique ;
une couche d'isolation ; et
une couche d'adhésif sensible à la pression faisant adhérer ledit matériau de revêtement à ladite couche d'isolation.

2. Combinaison selon la revendication 1, dans laquelle le matériau de revêtement comprend :
une couche centrale ;
une couche d'extrusion polymère disposée sur chaque côté de ladite couche centrale ; et
deux structures, une structure étant fixée à chaque couche d'extrusion polymère, chaque structure comprenant des couches alternées d'une feuille métallique et d'un film polymère résistant à la perforation ;
une couche d'isolation ; et
une couche d'adhésif sensible à la pression faisant adhérer ledit matériau de revêtement à ladite couche d'isolation.

3. Combinaison selon la revendication 1, dans laquelle le matériau de revêtement comprend :
une première couche d'une feuille métallique ;
une deuxième couche d'une feuille métallique ;
une troisième couche d'une feuille métallique ;
une première couche d'un film polymère résistant à la perforation disposée entre lesdites première et deuxième couches de feuille métallique ; et
une deuxième couche d'un film polymère résistant à la perforation disposée entre lesdites deuxième et troisième couches de feuille métallique.

4. Combinaison selon l'une quelconque des revendications 1 à 3, dans laquelle l'une desdites couches d'une feuille métallique est disposée sur une surface extérieure exposée dudit matériau de revêtement sur un côté dudit matériau de revêtement opposé à ladite couche d'isolation, ladite une desdites couches d'une feuille métallique étant dépourvue de revêtement.

5. Combinaison selon la revendication 3, dans laquelle au moins ladite première couche d'une feuille métallique est une feuille d'aluminium ayant une épaisseur dans la plage de 5 microns à 50 microns ; et dans laquelle au moins ladite première couche d'un film polymère résistant à la perforation est formée de polyester ayant une épaisseur dans la plage de 10 microns à 50 microns.

6. Combinaison selon l'une quelconque des revendications 3 ou 5, dans laquelle lesdites première et deuxième couches d'une feuille métallique sont liées à la première couche d'un film polymère résistant à la perforation par un adhésif, et dans laquelle lesdites deuxième et troisième couches d'une feuille métallique sont liées à ladite deuxième couche d'un film polymère résistant à la perforation par un adhésif.

7. Combinaison selon l'une quelconque des revendications 3, 5 ou 6, comprenant en outre :
une couche d'un adhésif sensible à la pression appliquée sur ladite troisième couche d'une feuille métallique ; et
une doublure anti-adhésive recouvrant ladite couche d'un adhésif sensible à la pression.

8. Combinaison selon l'une quelconque des revendications 3, 5, 6 ou 7, comprenant en outre une couche de protection disposée sur ladite première couche d'une feuille métallique, ladite couche de protection étant résistante au rayonnement ultraviolet, aux acides et au sel.

9. Combinaison selon la revendication 2, dans laquelle la couche centrale comprend un tissu tissé, un polyéthylène, ou un matériau non tissé en fibre de verre.

10. Combinaison selon l'une quelconque des revendications 2 ou 9, dans laquelle l'extrusion est formée d'un polyéthylène de basse densité.

11. Combinaison selon l'une quelconque des revendications 2, 9 ou 10, dans laquelle au moins l'une desdites structures comprend trois couches d'une feuille métallique et deux couches d'un film polymère résistant à la perforation, au moins une couche d'une feuille métallique étant disposée sur une surface extérieure du revêtement.

12. Procédé de protection d'une isolation contre des dommages causés par l'humidité et d'autres facteurs environnementaux, ledit procédé consistant à :
fournir un matériau de revêtement comportant une couche métallique sur une surface et une couche d'un adhésif sensible à la pression sur une deuxième surface opposée, ledit matériau de revêtement comprenant de multiples couches d'une feuille métallique et de multiples couches d'un film polymère résistant à la perforation, lesdites couches de film polymère résistant à la perforation alternant avec lesdites couches d'une feuille métallique ;
découper à la main une première feuille de taille appropriée dans le matériau de revêtement, sur un chantier ;
retirer une doublure anti-adhésive recouvrant la couche d'adhésif sensible à la pression de la première feuille ;
appliquer la première feuille sur l'isolation de telle sorte que la couche d'adhésif adhère à l'isolation et que la couche métallique soit exposée ; et
appliquer des feuilles additionnelles de matériau de revêtement directement sur l'isolation de telle sorte que chaque feuille de matériau de revêtement chevauche les feuilles de matériau de revêtement qui lui sont directement adjacentes.

13. Procédé selon la revendication 12, dans lequel le matériau de revêtement comprend :
une couche centrale ;
une couche d'extrusion polymère disposée sur chaque côté de ladite couche centrale ; et
deux structures, une structure étant fixée à chaque couche d'extrusion polymère, chaque structure comprenant des couches alternées d'une feuille métallique et d'un film polymère résistant à la perforation ;
une couche d'isolation ; et
une couche d'adhésif sensible à la pression faisant adhérer ledit matériau de revêtement à ladite couche d'isolation.

14. Procédé selon la revendication 12, dans lequel le matériau de revêtement comprend :
une première couche d'une feuille métallique ;
une deuxième couche d'une feuille métallique ;
une troisième couche d'une feuille métallique ;
une première couche d'un film polymère résistant à la perforation disposée entre lesdites première et deuxième couches de feuille métallique ; et
une deuxième couche d'un film polymère résistant à la perforation disposée entre lesdites deuxième et troisième couches de feuille métallique.
